(19) Europäisches Patentamt / European Patent Office / Office européen des brevets

(11) **EP 2 391 001 B1**

(12) **EUROPEAN PATENT SPECIFICATION**

(45) Date of publication and mention
of the grant of the patent:
**05.06.2013 Bulletin 2013/23**

(51) Int Cl.:
***H03D 3/00*** (2006.01)

(21) Application number: **11161952.4**

(22) Date of filing: **11.04.2011**

(54) **Implementation of complex sampling**

Einführung einer komplexen Abtastung

Réalisation d'un échantillonnage complexe

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.04.2010 IL 20498310**

(43) Date of publication of application:
**30.11.2011 Bulletin 2011/48**

(60) Divisional application:
**13001606.6**

(73) Proprietor: **Elta Systems Ltd.
77102 Ashdod (IL)**

(72) Inventors:
• **Fireaizen, Moshe
71945 Halamish (IL)**
• **Karasik, David
73130 Moshav Ginzo (IL)**

(74) Representative: **Grünecker, Kinkeldey,
Stockmair & Schwanhäusser
Leopoldstrasse 4
80802 München (DE)**

(56) References cited:
• **HUANG YONG ET AL: "Second-order sampling-
based fast recovery of bandpass signals",
SIGNAL PROCESSING PROCEEDINGS, 1998.
ICSP '98. 1998 FOURTH INTERNATION AL
CONFERENCE ON BEIJING, CHINA 12-16 OCT.
1998, PISCATAWAY, NJ, USA,IEEE, US, 12
October 1998 (1998-10-12), pages 7-10,
XP010336153, DOI: 10.1109/ICOSP.1998.770136
ISBN: 978-0-7803-4325-2**
• **JAE-HYUNG KIM ET AL: "Bandpass Sampling
Digital Frontend Architecture for Multi-Band
Access Cognitive Radio", GLOBAL
TELECOMMUNICATIONS CONFERENCE, 2009.
GLOBECOM 2009. IEEE, IEEE, PISCATAWAY, NJ,
USA, 30 November 2009 (2009-11-30), pages 1-6,
XP031646422, ISBN: 978-1-4244-4148-8**

**Description**

**Field of the Invention**

The present invention relates to digital signal processing. More particularly, the present invention relates to a method and system for performing complex sampling of signals by using two or more sampling channels (second-order sampling or higher) and calculating corresponding time delays between the two or more sampling channels.

**Definitions, Acronyms and Abbreviations**

Throughout this specification, the following definitions are employed:

**Signal Sampling:** is the process of converting a signal (e.g., that continuously varies in time or space) into a numeric sequence (e.g., having discrete values in time or space). It should be noted that a sampler is, generally, a system/device or operation(s) that enables extracting (producing) one or more samples from a signal. A theoretical ideal sampler produces samples equivalent to the instantaneous value of the continuous signal at one or more desired points in time or space.

**Complex Sampling:** is a sampling, in which an input signal is sampled, for example, by two samplers (sampling channels) that are shifted by ninety degrees, each relative to another. The output signal of the above sampling is a complex signal.

**Complex Signal:** is a signal consisting of real and imaginary parts. For example, if a complex signal is denoted X(t), then $X(t) = x_{real}(t) + i \cdot x_{imaginary}(t)$, wherein $i = \sqrt{-1}$. It should be noted that in actual physical systems, signals $x_{real}(t)$ and $x_{imaginary}(t)$ are both real, but are called the "real" and "imaginary" parts. The multiplier i is used to help define an operation(s) between different signals.

**FFT:** is an acronym for Fast Fourier Transform, which is an efficient algorithm to compute Discrete Fourier Transform (DFT) and its inverse. There are many distinct FFT algorithms in the art, involving a wide range of mathematic calculations, from simple complex-number arithmetic to group theory and number theory. Generally, the output of the Fast Fourier Transform is called the FFT spectrum.

**FFT Bin:** is a single frequency component of the FFT spectrum.

**Background of the Invention**

The subject matter of signal sampling is widely known in the prior art. Generally, it relates to digital signal processing and has high relevance in a variety of fields, such as communication, electronics, medicine, electro-optics, and many others. For example, in radio communication, sampling a signal and obtaining sufficient signal attenuation, while demodulating the desired signal from radio frequencies as close as possible to the baseband, is one of the main tasks. According to the commonly known Nyquist-Shannon sampling theorem, which is well known in the field of information theory, and in particular, in the field of digital signal processing and telecommunications, an analog signal that has been sampled can be fully reconstructed from the samples if the sampling frequency $F_S$ exceeds $2B$ samples per second ($2B$ is a Nyquist rate that is the minimum sampling rate required to avoid aliasing), where $B$ is the bandwidth of the original signal, i.e. $F_S > 2B$ or $F_S/2 > B$ (half of the sampling rate is larger than the signal bandwidth). However, the above theorem is valid when the signal frequency range does not contain whole multiples or half-multiples of the sampling rate (sampling frequency).

It should be noted that signals that are used in many applications are, in many cases, band limited to a predefined frequency interval, and thus these signals are called bandpass signals. A uniform sampling theorem for bandpass signal is known from the prior art, and its analysis is usually based on the time frequency equivalence. Thus, for example, A. W. Kohlenberg proposed the second order sampling for a bandpass signal (in the article titled "Exact interpolation of band-limited functions", published in the journal of Applied Physics, in 1953, issue 24(12), pages 1432-1436), which is considered to be the simplest case of non-uniform sampling where two uniform sampling sequences are interleaved. Second order sampling allows the theoretical minimal sampling rate of two-times bandwidth, in the form of an average rate, to be applied independent of the band position. In second order sampling, when the delay $\tau$ between two or more samplers is properly predefined, the signal can be fully reconstructed (e.g., by performing signal interpolation) even when the signal frequency range contains whole multiples or half-multiples of the sampling frequency.

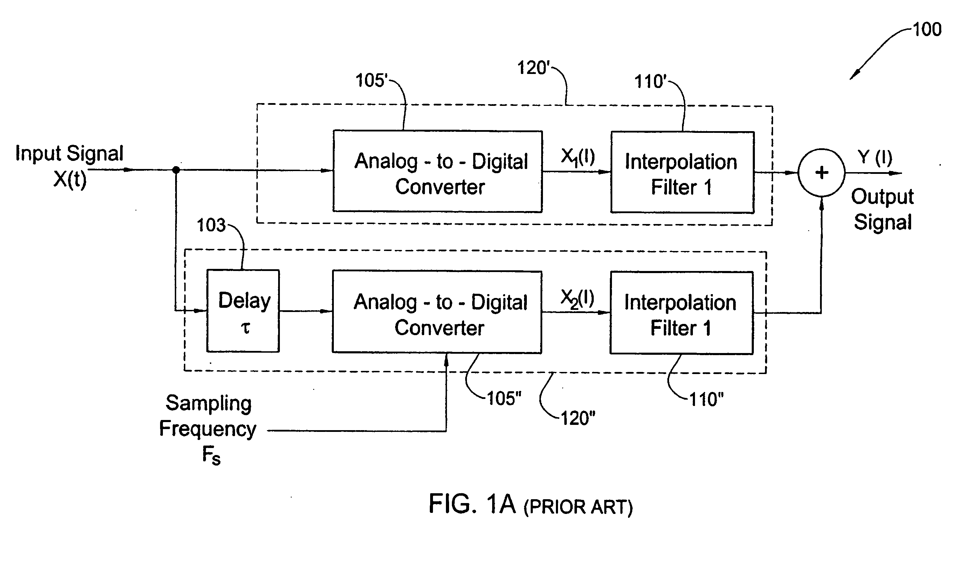

Fig. 1A schematically illustrates a conventional interpolation system 100 of second order sampling, according to the prior art. In Fig. 1A, the input signal $X(t)$ ($t$ is a time parameter) passes through two Analog-to-Digital (A/D) converters 105' and 105" with a predefined time delay $\tau$ between them. Then, the converted signals $X_1(l)$ and $X_2(l)$ are inputted into interpolation filters 110' and 110", respectively, for performing signal interpolation, which includes digital to analog conversion. After that, the resulting interpolated signals are summed together, giving rise to the output signal $Y(l)$, and in turn $Y(t)$.

It should be noted that second order sampling and its limitations are well-known in the prior art, and this issue is discussed in the literature. For example, R.G. Vaughan et al., in the article titled "The Theory of Bandpass Sampling" published in the "IEEE Transactions on Signal Processing" journal (volume 39, number 2, pp. 1973-1984, September 1991), discusses sampling of bandpass signals with respect to band position, noise considerations, and parameter sensitivity, presenting acceptable and unacceptable sample rates with specific discussion of the practical rates which are non-minimum. According to Vaughan et al., the construction of a bandpass signal from second-order samples depends on sampling factors and the relative delay between the uniform sampling streams. For another example, M. Valkama et al., in the article titled "A Novel Image Rejection Architecture for Quadrature Radio Receivers" published in the "IEEE Transactions on Circuits and Systems" journal (volume 51, number 2, pp. 61-68, February 2004), presents a novel structure for obtaining an image-free baseband observation of the received bandpass signal by utilizing I/Q (Inphase/ Quadrature) signal processing. The phase difference between I and Q branches is approximated by a relative time delay of one quarter of the carrier cycle. Also, Valkama et al. presents and analyzes an analog delay processing based model, and then determines the obtainable image rejection of the delay processing. In addition, Valkama et al. in another article titled "Second-Order Sampling of Wideband Signals", published in the "IEEE International Symposium on Circuits and Systems" journal (volume 2, pp. 801-804, May 2001), discusses and analyzes the second-order sampling based digital demodulation technique. According to Valkama et al., the modest image rejection of the basic second-order sampling scheme is improved to provide sufficient demodulation performance also for wideband receivers. Further, for example, H. Yong et al. in the article titled "Second-Order Based Fast Recovery of Bandpass Signals", published in the "International Conference on Signal Processing Proceedings" journal (volume 1, pp. 7-10, 1998), discusses fast recovery and frequency-differencing of real bandpass signals based on second-order sampling. According to H. Yong et al., by using second-order sampling, the sampling rate can be lowered to the bandwidth. Although the spectrum of the two interleaved sampling streams are aliasing, it is possible to reconstruct the original or frequency-differencing bandpass signal.

Further, it should be noted that the conventional complex signal processing is also used in processing schemes where an input signal is bandpass in its origin, and is to be processed in a lowpass form. This normally requires two-channel processing in quadrature channels to remove an ambiguity as to whether a signal is higher or lower than the bandpass center frequency. The complex signal processing can be extended to the digital signal processing field, and the processed signal can be first mixed to zero-center frequency in two quadrature channels, then filtered to remove the high frequency mixing products, and after that digitized by a number of A/D (Analog-to-Digital) converters.

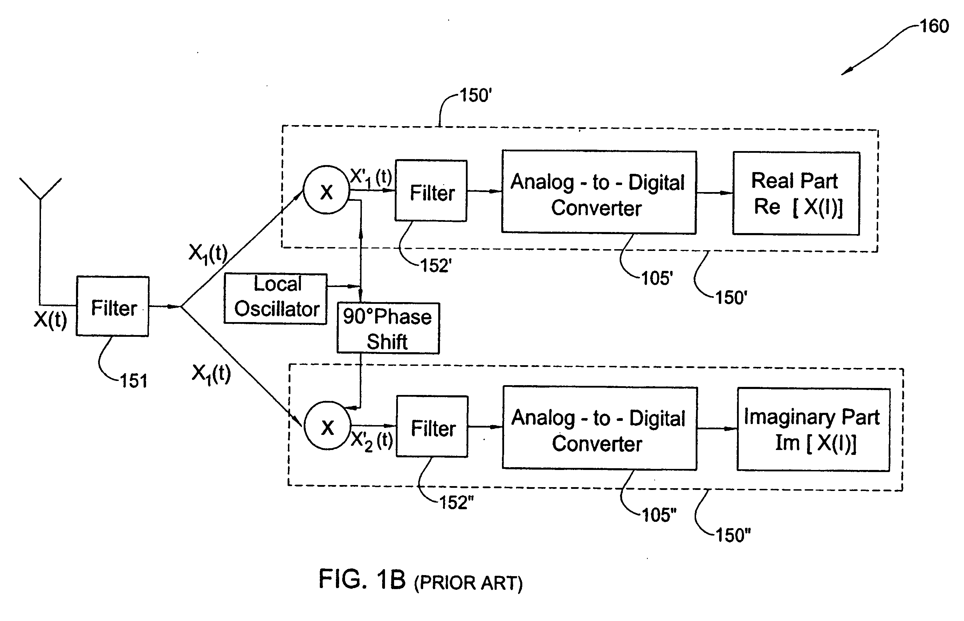

According to the prior art, Fig. 1B schematically illustrates a conventional complex sampling system 160, in which an input signal is sampled in two sampling channels 150' and 150", while shifting the phase by ninety degrees. At the output of such a system, a complex signal is obtained, said signal having a real part $Re\{X(l)\}$ and an imaginary part $Im\{X(l)\}$, wherein parameter $l$ represents a series of discrete values. Filters 151, 152' and 152" are used to filter the undesired frequency range (in a time domain) of input signals $X(t)$, $X_1'(t)$ and $X_2'(t)$, respectively.

US 5,099,194 discloses an approach to extending the frequency range uses non-uniform sampling to gain the advantages of a high sampling rate with only a modest increase in the number of samples. Two sets of uniform samples with slightly different sampling frequency are used. Each set of samples is Fourier transformed independently and the frequency of the lowest aliases determined. It is shown that knowledge of these two alias frequencies permits unambiguous determination of the signal frequency over a range far exceeding the Nyquist frequency, except at a discrete set of points.

US 5,099,243 presents a technique for extending the frequency range which employs in-phase and quadrature components of the signal coupled with non-uniform sampling to gain the advantages of a high sampling rate with only a small increase in the number of samples. By shifting the phase of the local oscillator by 90 degrees, a quadrature IF signal can be generated. Both in-phase and quadrature components are sampled and the samples are combined to form a complex signal. When this signal is transformed, only one alias is obtained per periodic repetition and the effective Nyquist frequency is doubled. Two sets of complex samples are then used with the slightly different sampling frequency. Each set is independently Fourier transformed and the frequency of the lowest aliases permits unambiguous determination of the signal frequency over a range far exceeding the Nyquist frequency.

US 5,109,188 teaches a technique for extending the frequency range which employs a power divider having two outputs, one output being supplied to a first Analog-to-Digital (A/D) converter, and the other output being supplied via a delay device to a second A/D converter. A processor receives the outputs of the two A/D converters. In operation, the input signal is subjected to a known delay and both original and delayed signals are sampled simultaneously. Both sampled signals are Fourier transformed and the phase and amplitudes calculated. The phase difference between the original and delayed signals is also calculated, and an approximation to the true frequency for each peak observed in the amplitude spectrum is estimated.

The document

D1 HUANG YONG ET AL: "Second-order sampling-based fast recovery of bandpass signals",SIGNAL PROCESSING PROCEEDINGS, 1998. ICSP '98. 1998 FOURTH INTERNATION AL CONFERENCE ON BEIJING, CHINA 12-16 OCT. 1998, PISCATAWAY, NJ, USA,IEEE, US, 12 October 1998 (1998-10-12), pages 7-10, DOI: 10.1109/ICOSP.1998.770136, ISBN: 978-0-7803-4325-2

discloses a second order sampling exploiting defined interpolants in the first and second branches.

Based on the above observations, there is a continuous need in the art to provide a method and system configured to perform complex sampling of signals by using two or more sampling channels (second-order sampling or higher) and enabling operating with a signal bandwidth that can be equal to the sampling frequency (or to higher multiples of the sampling frequency). In addition, there is a need in the art to provide a method and system for performing signal processing by using second order (or higher order) sampling, in a frequency domain, without considering whether the signal frequency range contains whole multiples or half-multiples of the sampling frequency. Further, there is a continuous need in the prior art to enable calculating corresponding time delays between the two or more sampling channels in a relatively accurate manner.

## Summary of the Invention

The present invention relates to a method and system for performing complex sampling of signals by using two or more sampling channels (second-order sampling or higher) and calculating corresponding time delays between the two or more sampling channels as defined in the independent claims.

## Brief Description of the Drawings

In order to understand the invention and to see how it may be carried out in practice, various embodiments will now be described, by way of non-limiting examples only, with reference to the accompanying drawings, in which:

- Fig. 1A schematically illustrates a conventional interpolation system of second order sampling, according to the prior art;

- Fig. 1B schematically illustrates a conventional complex sampling system, in which an input signal is sampled in two sampling channels, while shifting the phase by ninety degrees, according to the prior art;

- Fig. 2 is a schematic illustration of complex sampling in a frequency domain by performing second-order sampling, according to an embodiment of the present invention;

- Fig. 3 is a schematic illustration of a complex sampling system, performing sampling in a time domain, according to another embodiment of the present invention; and

- Fig. 4 is a schematic illustration of a system for complex sampling by performing sampling of 2M-order, according to still another embodiment of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## Detailed Description of the Embodiments

Unless specifically stated otherwise, as apparent from the following teachings, it is noted that throughout the specification utilizing terms such as "processing", "computing", "calculating", "determining", or the like, refer to the action and/or processes of a computer (machine) that manipulate and/or transform data into other data, said data represented as physical, e.g. such as electronic, quantities. The term "computer" should be expansively construed to cover any kind of electronic device with data processing capabilities, comprising, by the way of non-limiting examples, personal computers, servers, computing systems/units, communication devices, processors (e.g., digital signal processors (DSPs), microcontrollers, field programmable gate arrays (FPGAs), application specific integrated circuits (ASICs), etc.), and any other electronic computing devices. Also it should be noted that operations in accordance with the teachings herein may be performed by a computer that is specially constructed for the desired purposes or by a general purpose computer that is specially configured for the desired purpose by means of a computer program stored in a computer readable storage medium.

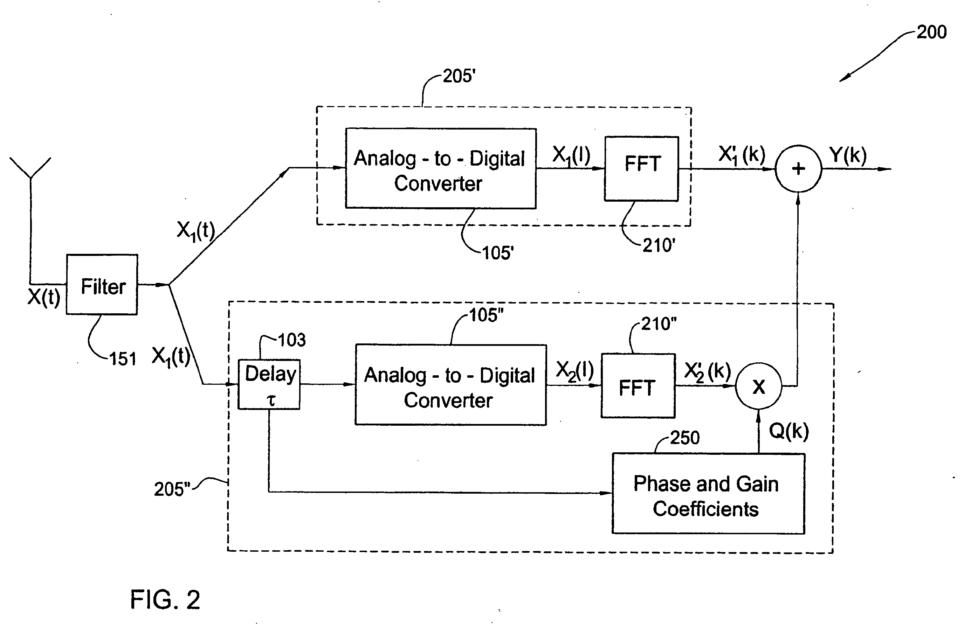

Fig. 2 is a schematic illustration 200 of complex sampling in a frequency domain by performing second-order sampling, according to an embodiment of the present invention. According to this embodiment, input signal $X(t)$ is first filtered by means of filter 151 in order to remove the undesired frequency range (in a time domain). Then, the filtered signal $X_1(t)$ is sampled by means of two sampling channels (systems/modules) 205' and 205", having a predefined time delay r between them, and then is converted to corresponding digital signals by means of conventional A/D converters 105' and 105", giving rise to $X_1(l)$ and $X_2(l)$ signals respectively. After that, digital signals $X_1(l)$ and $X_2(l)$ are processed and converted to a frequency domain by means of the FFT (Fast Fourier Transform), which is a conventional technique for performing a discrete Fourier transform. As a result, discrete signals $X_l'(k)$ and $X_2'(k)$ are obtained, wherein $k$ is an index. It should be noted that the frequency band of input analog signal $X(t)$ is known (the frequency bandwidth is equal to the sampling frequency $Fs$), and therefore the phase difference of each frequency component of the delayed signal $X_2(k)$, which is provided via delayed sampling channel 205", can be calculated. According to an embodiment of the present invention, the frequency spectrum of delayed signal $X_2'(k)$ is multiplied by a corresponding set of predefined phase and gain coefficients $Q(k)$ 250, each having a gain and phase (e.g., $Q(k) = g_k \cdot \exp(i \cdot \Delta\varphi_k)$, wherein $k$ is an index). Then, the spectrum of delayed signal $X_2'(k)$ is summed (combined) with the spectrum of signal $X_l'(k)$, giving rise to (generating) signal Y(k) that has a spectrum being equivalent to the spectrum of a complex signal, which can be also obtained by means of conventional complex sampling.

According to an embodiment of the present invention, the desired time delay r may be different for different frequency bands. Further, the time delay $\tau$ may be obtained either by providing time delay component/unit 103 (in which the time delay $\tau$ can be predefined) or by performing a phase difference (e. g., a phase shift) of a sampling frequency, leading to a desired time delay of a signal. It should be noted that one or more phase and gain coefficients $Q(k)$ 250 are used for (are applied to) each frequency component of signal $X_2'(k)$. These phase and gain coefficients $Q(k)$, provided within the corresponding coefficients data unit 250, can be predefined, for example, empirically by substantially accurate measuring of the above time delay $\tau$. It should be noted that even in a case when time delay $\tau$ is a frequency-dependent component, the corresponding phase and gain coefficients $Q(k)$ can be still calculated and predefined thereof.

According to an embodiment of the present invention, the phase and gain coefficients are pre-calculated during the calibration process of system 200, and then are stored within the memory means (not shown), while there is a need for a coefficient for each frequency component of signal $X_2'(k)$, after applying the FFT transform. Further, for calculating the corresponding phase difference $\Delta\varphi(k)$, there is a need to provide a signal of a predefined frequency, and then calculate the corresponding phase difference $\Delta\varphi(k)$ between the delayed and reference signals $X_2'(k)$ and $X_1'(k)$, respectively. In addition, it should be noted that the power ratio between two channels (the non-delayed channel 205' and delayed channel 205") is calculated and corresponding gain coefficients $g_k$ ($k$ is an index) are determined and stored within memory means (not shown) for later usage. This can be achieved in several ways, according to various embodiments of the present invention. According to one embodiment of the present invention, substantially all frequencies that correspond to the FFT frequency component to be calculated are provided, and then a phase difference for each such component is calculated. If it is supposed, for example, that the frequency range is ($F_s$, $2F_s$) and the FFT length is $N$, then the set of frequencies $f(k)$ that correspond to the FFT frequency components are:

$$f(k) = F_s + \frac{k}{N} \cdot F_s, \ for \ k = 0,...,N-1 \qquad (1)$$

For each of the above $N$ frequencies, the phase difference $\Delta\varphi$ between the sampling channels 205' and 205" is calculated.

According to another embodiment of the present invention, a number of frequencies are provided in intervals that are greater than the FFT bin (*bin* is defined as $F_s/N$, wherein $N$ represents a number of FFT frequency components), and then the phase difference for each provided frequency is calculated by performing interpolation for each FFT frequency component. Thus, for example, if the frequency range is ($F_s$, $2F_s$) and $N/16$ frequencies are provided, then the set of frequencies that correspond to the FFT frequency components are:

$$f(m) = Fs + \frac{16m}{N} \cdot Fs, \text{ for } m = 0,\ldots,N/16-1 \qquad (2)$$

According to this embodiment, for each of the above $N/16$ frequencies, the phase difference $\Delta\varphi$ between the sampling channels 205' and 205" is calculated. After that, the phase differences for each frequency component is calculated by performing interpolation of the corresponding phase difference $\Delta\varphi$ for each FFT frequency component of signal $X_2'(k)$:

$$\Delta\varphi(k; 16m \le k < 16m + 15) = \Delta\phi(m) + \frac{k - 16m}{16}\left(\Delta\phi(m+1) - \Delta\phi(m)\right) \qquad (3)$$

According to a further embodiment of the present invention, a relatively small number of frequencies are provided in non-uniform frequency intervals, and then the phase differences $\Delta\varphi(m)$ between these frequencies are determined. After that, the time delay $\tau$ is calculated by using the above-determined phase differences $\Delta\varphi(m)$ by means of a novel method for calculating time delays between sampling channels (such as channels 205' and 205"), according to an embodiment of the present invention. The phase differences $\Delta\varphi(m)$ for each FFT frequency component can be calculated by using the following equation:

$$\Delta\varphi = \mathrm{mod}(2\pi \cdot f \cdot \tau)_{2\pi} \qquad (4)$$

wherein $f$ is a frequency, and $\mathrm{mod}(\cdot)_{2\pi}$ is a "modulo" mathematical operator.

In general, when a real signal (having frequency $f$) is received, and the FFT (having length $N$) of said signal is calculated, then the resulting signal will appear at the frequency spectrum as a frequency component of the FFT bin $k$ (generally, a FFT bin is a single frequency of the FFT, to which each frequency component contributes):

$$f = F_s \cdot (n + \frac{k}{N}) \qquad (5)$$

wherein $f$ is a signal frequency; $Fs$ is a sampling frequency; $N$ is the FFT length; $n$ is an integer; and $k$ is a FFT bin number. Also, an additional (for example, undesired) frequency component appears in the FFT bin $(N-k)$, due to the symmetry of the conventional FFT. It should be noted that the phase difference $\Delta\varphi_{N-k}$ of the above undesired frequency component has an opposite sign compared to the phase difference $\Delta\varphi_k$ of the desired frequency component that appears in the FFT bin $k$.

According to an embodiment of the present invention, in order to cancel the above undesired frequency component appearing in the FFT bin $(N-k)$, the frequency components can be summed (combined) by using the following equation:

$$Y(k) = X_1'(k) - g_{N-k} \cdot \exp(i \cdot \Delta\varphi_{N-k}) \cdot X_2'(k) \qquad (6)$$

wherein $\Delta\varphi_{N-k}$ is a predefined phase difference of the frequency component that contributes to bin $N-k$; $g_{N-k}$ is a gain coefficient calculated for that frequency component; $X_1'(k)$ and $X_2'(k)$ are corresponding frequency components of non-delayed and delayed signals, respectively; and $Y(k)$ re presents frequency components at the output of system 200. As a result, the frequency spectrum of the output signal $Y(k)$ is equivalent to the frequency spectrum of the conventional complex sampling.

It should be noted that according to an embodiment of the present invention, when a complex sampling is required in a time domain, then an inverse frequency-domain transformation, such as the Inverse Fourier transform (IFFT), can be performed on the frequency spectrum obtained by implementing system 200.

According to an embodiment of the present invention, time delays (time differences) between sampling channels (such as channels 205' and 205" (Fig. 2)) can be calculated in a relatively accurate manner (for example, by means of a processing unit/system), as described below in detail. According to this embodiment, the corresponding time delay r can be calculated by using the following relationship between the time delay $\tau$ and phase difference $\Delta\phi$:

$$2 \cdot \pi \cdot f_1 \cdot \tau = \Delta\phi_1 + 2 \cdot \pi \cdot N \qquad (7)$$

and

$$2 \cdot \pi \cdot (f_1 + \Delta f) \cdot \tau = \Delta\phi_2 + 2 \cdot \pi \cdot (N + M) \qquad (8)$$

wherein $\Delta\phi_1$ is a phase difference of a signal having frequency $f_1$; $\Delta\phi_2$ is a phase difference of a signal having frequency $f_2$, while $f_2 = f_1 + \Delta f$; and $M$ and $N$ are integers. It should be noted that the above two equations have three variables: time delay r, integer $M$ and integer $N$.

For the bound range of values of time delay $\tau$, the bound for integer $M$ can be determined by using the following equation, which is a result of subtracting equation (8) from equation (7):

$$M = \tau \cdot \Delta f - \frac{\Delta\phi_2 - \Delta\phi_1}{2\pi} \qquad (9)$$

In such a way, the first approximation of integer $M$ can be determined, considering that $0 < \Delta\phi_1 < 2\pi$ and $0 < \Delta\phi_2 < 2\pi$, and considering that $\Delta f$ is known.

Further, by measuring frequency differences $\Delta f_{12}$ and $\Delta f_{13}$ between three predefined frequencies $f_1$, $f_2$ and $f_3$, such that $\Delta f_{12} = f_2 - f_1$ and $\Delta f_{13} = f_3 - f_1$, the corresponding time delay $\tau$ can be calculated by dividing the above equation (9) by said frequency differences $\Delta f_{12}$ and $\Delta f_{13}$, respectively:

$$\tau = \frac{\Delta\phi_2 - \Delta\phi_1}{2\pi \cdot \Delta f_{12}} + \frac{M_1}{\Delta f_{12}} \qquad (10)$$

and

$$\tau = \frac{\Delta\phi_3 - \Delta\phi_1}{2\pi \cdot \Delta f_{13}} + \frac{M_2}{\Delta f_{13}} \qquad (11)$$

wherein $M_1$ and $M_2$ are bounded integers. Then, as a result, the following equation is obtained:

$$\frac{\Delta\phi_2 - \Delta\phi_1}{2\pi \cdot \Delta f_{12}} + \frac{M_1}{\Delta f_{12}} = \frac{\Delta\phi_3 - \Delta\phi_1}{2\pi \cdot \Delta f_{13}} + \frac{M_2}{\Delta f_{13}} \qquad (12)$$

Thus, considering that $M_1$ and $M_2$ are bounded integers, and also phase differences $\Delta\phi_1$, $\Delta\phi_2$, $\Delta\phi_3$ and frequency differences $\Delta f_{12}$, $\Delta f_{13}$ are all known, then the first approximation of time delay $\tau$ can be determined. This time delay approximation can be inserted in equation (9) for obtaining a value of $M$ in a relatively accurate manner, considering that $M$ is a bounded integer. Then, after determining the value of $M$, the value of $N$ can be also determined by inserting the determined value of $M$ into equations (7) and (8). As a result, both bounded integers $M$ and $N$ are determined, and the time delay $\tau$ is calculated in a relatively accurate manner by using the same equations (7) and (8).

It should be noted that according to an embodiment of the present invention, the range of time delays $\tau$ can be selected in the following way. It is supposed, for example, that the frequencies are within the range of $[F_{start}, F_{start}+BW]$, wherein $F_{start}$ is a starting frequency, and $BW$ is a bandwidth, while $Fs \geq BW$ ($Fs$ is a sampling frequency). The gain (in dB (Decibels)) for the desired frequency component (of the FFT) can be presented by the following equation:

$$10\log_{10}\left(2\left|\sin\left(\frac{\Delta\varphi_k + \Delta\varphi_{N-k}}{2}\right)\right|^2\right) \qquad (13)$$

wherein $\Delta\varphi_k$ is the phase difference of the frequency component that appears in the FFT bin $k$, when the frequency is

$f = \left(n + \dfrac{k}{N}\right) \cdot F_s$; and $\Delta\varphi_{N-k}$ is the phase difference of the frequency component that appears in the FFT bin $N-k$,

when the frequency is $f = \left(\tilde{n} + \dfrac{N-k}{N}\right) \cdot F_s$. If $nF_s \geq F_{start} > (n-1) \cdot F_s$, then the phase difference $\Delta\varphi_k$ is presented by:

$$\Delta\varphi_k = 2\pi\left(n + \frac{k}{N}\right) \cdot F_s \cdot \tau \qquad (14)$$

wherein $n$ is an integer, and $\tau$ is a time delay, which can be, for example, in the range determined by the following equation:

$$\frac{5}{6 \cdot (2n+1)} > F_s \cdot \tau > \frac{1}{6 \cdot (2n-1)} \qquad (15)$$

It should be noted that selecting the delay $\tau$ within the above range ensures that in addition to removing the undesired frequency component (FFT bin ($N-k$)) of the frequency spectrum, the power of the desired frequency component (FFT bin k) will not be decreased more than 3dB (Decibels), as shown in the equation below:

$$10\log_{10}\left(2\left|\sin\left(\frac{\Delta\varphi_k + \Delta\varphi_{N-k}}{2}\right)\right|^2\right) > -3dB \qquad (16)$$

wherein $\Delta\varphi_k$ and $\Delta\varphi_{N-k}$ are phase differences in bins $k$ and ($N$-$k$), respectively. In addition, it should be noted that any other constraints can be considered, such as ensuring that the power of the desired frequency component will not be decreased, for example, more than 2dB (instead of 3dB), and the like.

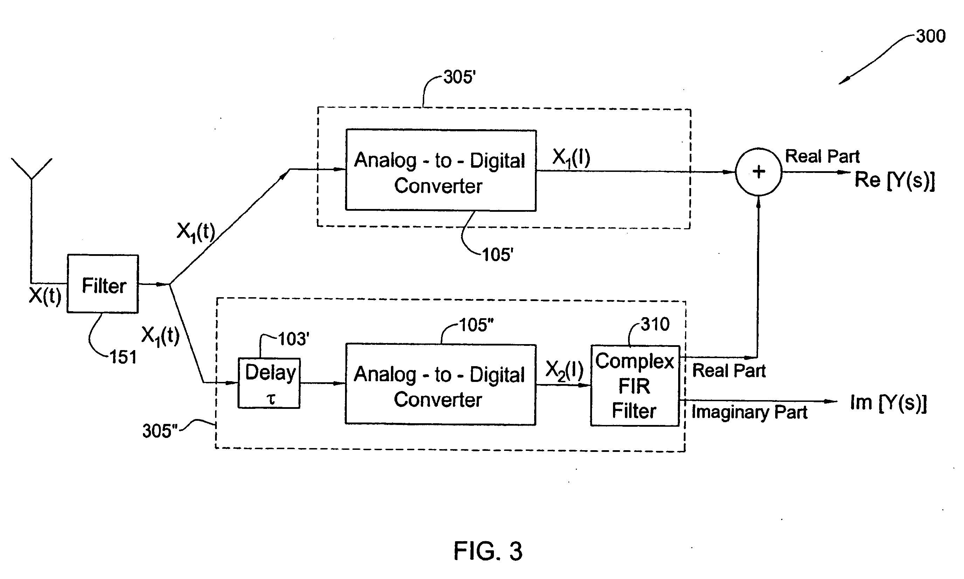

Fig. 3 is a schematic illustration of a complex sampling system 300, performing sampling in a time domain, according to another embodiment of the present invention. According to this embodiment of the present invention, signal $X_2(l)$ passes through a digital FIR (Finite Impulse Response) filter unit 310. This filter is a complex filter and at its output, complex signal samples are obtained. The real part of the signal samples after FIR filter 310 is added to signal $X_1(l)$ that is outputted from A/D converter 105', giving rise to $Re\{Y(s)\}$ signal, which is a real part of the signal, to which the complex sampling is applied. On the other hand, in the delayed sampling channel 305", the imaginary part of the signal samples, after passing via the FIR filter 310, is the imaginary part ($Im\{Y(s)\}$) of the signal, to which the complex sampling is applied.

According to an embodiment of the present invention, the FIR filter coefficients $h(p)$ can be obtained by applying an inverse Fast Fourier transform (IFFT) on phase and gain coefficients $Q(k)$ 250 (Fig. 2):

$$h(p) = \frac{1}{N}\sum_{k=0}^{N-1} g_k \cdot \exp(i \cdot \Delta\varphi_k) \cdot \exp(2\pi \cdot i\frac{k \cdot p}{N}) \qquad (17)$$

wherein $g_k$ and $\Delta\varphi_k$ are a gain and phase difference, respectively, of the corresponding signal passing via delayed sampling channel 305"; $k$ and $p$ are indices; $i$ is $\sqrt{-1}$; and $N$ is a number of frequency components. It should be noted that each phase and gain coefficient $Q(k)$ can be equal to $g_k \cdot \exp(i - \Delta\varphi_k)$, which is indicated within the above expression of $h(p)$.

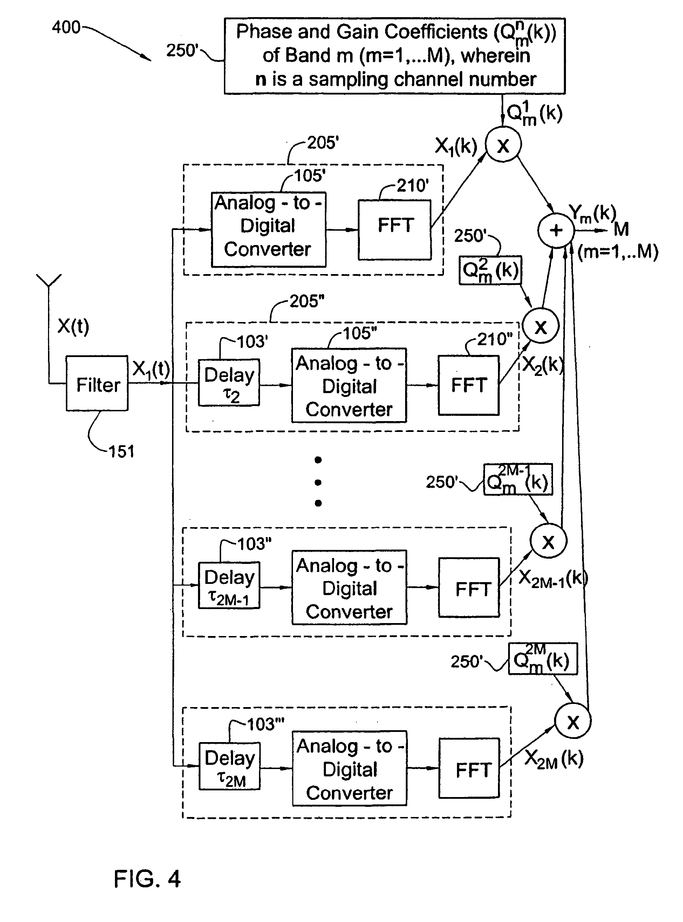

Fig. 4 is a schematic illustration of a system 400 for complex sampling by performing sampling of the $2M$-order sampling (the predefined-order sampling), according to still another embodiment of the present invention. According to this embodiment, if providing $2M$ sampling channels (two or more sampling channels) with predefined delays $\tau_1$, $\tau_2$, ..., $\tau_n$ between them, then operating with signal bandwidth $BW = M \cdot F_s$ becomes possible, wherein $F_s$ is a sampling frequency. This can be compared to system 200 (Fig. 2), for which signal bandwidth $BW$ is less or equal to the sampling frequency: $BW \le F_s$.

It is supposed, for example, that sampling channels 205', 205", etc. are represented by index $n$, while $n \in [1, 2M]$. The output frequency bands (Band 1, Band 2, etc.) are represented by index $m$, while $m \in [1, M]$. In addition, each FFT bin is numbered by index $k$. The FFT of a signal is calculated in each sampling channel and is represented as $X_n$ $(k)$, the output frequency spectrum is represented as $Y_m (k)$, and phase and gain coefficients 250' are shown as $Q_m^n(k)$. Thus, according to an embodiment of the present invention, the output frequency signal $Y_m (k)$ can be calculated by using the following equation, in which each at least one phase and gain coefficient $Q_m^n(k)$ is multiplied with its corresponding signal $X_n(k)$ :

$$Y_m(k) = \sum_{n=1}^{2M} Q_m^n(k) \cdot X_n(k) \qquad (18)$$

It can be further supposed, for example, that input frequency $F$ belongs to Band $M$ if $F \in [F_{start} + (m$-$1)F_s$, $F_{start} + m \cdot F_s]$, wherein $F_{start}$ is a starting frequency that is defined manually or automatically according to the need of a user of system 400; and $F_s$ is a sampling frequency, while $m \in [1,M]$. Also, the frequency appears in the FFT bin, if one of the following two equations takes place:

$$round\left(\mathrm{mod}(F,F_s) \cdot \frac{N}{F_s}\right) = k \quad \text{or} \quad round\left(\mathrm{mod}(F,F_s) \cdot \frac{N}{F_s}\right) = (N-k) \qquad (19)$$

wherein $k$ and $(N-k)$ are corresponding FFT bins; $N$ is the FFT length; and mod($\cdot$) is a "modulo" mathematical operator.

The phase difference $\Delta\varphi_n^m(k)$ of each corresponding frequency component depends on frequency $F^m(k)$ (of FFT bin $k$ in Band $m$ ($m\in[1,M]$)) and on the sampling channel delay $\tau_1, \tau_2, ..., \tau_n$, as shown in the following equation:

$$\Delta\varphi_n^m(k) = 2\pi \cdot F^m(k) \cdot \tau_n \qquad (20)$$

It should be noted that the frequency spectrum of a signal $X_n(k)$ passing via each corresponding sampling channel (such as sampling channels 205', 205", etc.) is composed of frequencies received from all bands (such as Band 1, Band 2, etc.). Thus, signals from $2M$ possible frequency sources are provided to the corresponding bin $k$ of the FFT, as presented in the following equation.

$$X_n(k) = \sum_{m=1}^{M}[X(F^m(k)) \cdot e^{i\cdot\Delta\varphi_n^m(k)} + X^*(F^m(N-k)) \cdot e^{-i\cdot\Delta\varphi_n^m(N-k)}] \qquad (21)$$

As a result, the corresponding matrices of signals $X_n(k)$ can be presented as follows:

$$\begin{pmatrix} X_1(k) \\ X_2(k) \\ \vdots \\ X_{2M-1}(k) \\ X_{2M}(k) \end{pmatrix} = \begin{pmatrix} e^{i\cdot\Delta\varphi_1^1(k)} & e^{-i\cdot\Delta\varphi_1^1(N-k)} & \cdots & e^{-i\cdot\Delta\varphi_1^M(N-k)} \\ e^{i\cdot\Delta\varphi_2^1(k)} & \vdots & \ddots & \vdots \\ \vdots & \vdots & \ddots & \vdots \\ e^{i\cdot\Delta\varphi_{2M-1}^1(k)} & \vdots & \ddots & \vdots \\ e^{i\cdot\Delta\varphi_{2M}^1(k)} & e^{-i\cdot\Delta\varphi_{2M}^1(N-k)} & \cdots & e^{-i\cdot\Delta\varphi_{2M}^M(N-k)} \end{pmatrix} \cdot \begin{pmatrix} X(F^1(k)) \\ X^*(F^1(N-k)) \\ \vdots \\ X(F^M(k)) \\ X^*(F^M(N-k)) \end{pmatrix} \qquad (22)$$

wherein $k$ and $(N-k)$ are corresponding FFT bins; and $N$ is the FFT length. If it is supposed, for example, that $P(k)$ matrix is defined as follows:

$$P(k) = \begin{pmatrix} e^{i\cdot\Delta\varphi_1^1(k)} & e^{-i\cdot\Delta\varphi_1^1(N-k)} & \cdots & e^{-i\cdot\Delta\varphi_1^M(N-k)} \\ e^{i\cdot\Delta\varphi_2^1(k)} & \vdots & \ddots & \vdots \\ \vdots & \vdots & \ddots & \vdots \\ e^{i\cdot\Delta\varphi_{2M-1}^1(k)} & \vdots & \ddots & \vdots \\ e^{i\cdot\Delta\varphi_{2M}^1(k)} & e^{-i\cdot\Delta\varphi_{2M}^1(N-k)} & \cdots & e^{-i\cdot\Delta\varphi_{2M}^M(N-k)} \end{pmatrix} \qquad (23)$$

then, by further considering that the desired frequency spectrum at the output is

$$Y_m(k) = X(F^m(k)) = \sum_{n=1}^{2M} Q_m^n(k) \cdot X_n(k) \quad \text{(i.e., the output signal } Y_m(k) \text{ is adapted to a specific frequency band/}$$

spectrum), the corresponding phase and gain coefficients $Q_m^n(k)$ can be calculated by inverting the matrix $P(k)$ and obtaining:

$$Q_m^n(k) = \begin{pmatrix} 1 & 0 & \cdots & 0 & 0 \\ \vdots & \ddots & \ddots & \ddots & \vdots \\ 0 & 0 & \cdots & 1 & 0 \end{pmatrix} \cdot P^{-1}(k) \qquad (24)$$

Thus, for example, if $M=2$, the phase and gain coefficients $Q_m^n(k)$ are equal to:

$$Q_m^n(k) = \begin{pmatrix} 1 & 0 & 0 & 0 \\ 0 & 0 & 1 & 0 \end{pmatrix} \cdot P^{-1}(k) \qquad (25)$$

For another example, if $M=3$, then the phase and gain coefficients $Q_m^n(k)$ are equal to:

$$Q_m^n(k) = \begin{pmatrix} 1 & 0 & 0 & 0 & 0 & 0 \\ 0 & 0 & 1 & 0 & 0 & 0 \\ 0 & 0 & 0 & 0 & 1 & 0 \end{pmatrix} \cdot P^{-1}(k) \qquad (26)$$

According to an embodiment of the present invention, the constraint for selecting time delay values in this case can be such that $P(k)$ matrix is not singular, which means that the determinant of said $P(k)$ matrix does not become equal to zero or almost equal to zero (i.e., there are no two or more substantially equal time delays $\tau$, for example).

While some embodiments of the invention have been described by way of illustration, it will be apparent that the invention can be put into practice with many modifications, variations and adaptations, without departing from the scope of the claims.

## Claims

1. A system configured to perform a complex sampling of a signal transformed to a frequency-domain by means of a 2M-order sampling, wherein the signal bandwidth is included into [$F_{start}$, $F_{start}+MF_s$], M being an integer, $F_{start}$ being a starting frequency defined manually or automatically and $F_s$ being a sampling frequency of the sampling, said system comprising:

   a) a sampling channel (205') comprising:

   a.1. at least one analog-to-digital converter (105') configured to convert an analog signal to a corresponding substantially non-delayed digital signal; and
   a.2. at least one frequency-domain discrete transformation unit (210')for transforming said digital signal to a plurality of corresponding frequency-domain substantially non-delayed discrete components;

   b) 2M-1 additional sampling channels (205") enabling to perform the 2M-order sampling, each additional sampling channel comprising:

   b.1. at least one delay unit (103) configured to delay an analog signal by a predefined value, giving rise to a delayed analog signal;
   b.2. at least one analog-to-digital converter (105") configured to convert said delayed analog signal to a corresponding delayed digital signal;

b.3. at least one frequency-domain discrete transformation unit (210") for transforming said delayed digital signal to a plurality of frequency-domain delayed discrete components;

b.4. at least one data unit (250) configured to provide one or more corresponding coefficients for each frequency-domain delayed discrete component and for each output frequency band defined by [$F_{start}$ +(m-1)$F_s$, $F_{start}$+m$F_s$], m $\in$ [1, M]; and

b.5. at least one multiplication unit configured to multiply said one or more corresponding coefficients with said each corresponding frequency-domain delayed discrete component, giving rise to the multiplied frequency-domain delayed discrete components; and

c) at least one summation unit for summing said multiplied frequency-domain delayed discrete components with the corresponding frequency-domain substantially non-delayed discrete components, giving rise to an output frequency-domain complex signal;

wherein:

- the output frequency-domain signal $Y_m$ is defined for a corresponding output frequency band m, by

$$Y_m(k) = \sum_{n=1}^{2M} Q_m^n(k) \cdot X_n(k),$$

○ $X_n(k)$ corresponding to the frequency-domain discrete components from the sampling channels;
○ $Q_m^n(k) = [P^{-1}(k)]_{2m-1}^n$ being the coefficients for each frequency-domain delayed discrete component and for each output frequency band;
○

$$P(k) = \begin{pmatrix} e^{i \cdot \Delta \varphi_1^1(k)} & e^{-i \cdot \Delta \varphi_1^1(N-k)} & \cdots & e^{-i \cdot \Delta \varphi_1^M(N-k)} \\ e^{i \cdot \Delta \varphi_2^1(k)} & \vdots & \ddots & \vdots \\ \vdots & \vdots & \ddots & \vdots \\ e^{i \cdot \Delta \varphi_{2M-1}^1(k)} & \vdots & \ddots & \vdots \\ e^{i \cdot \Delta \varphi_{2M}^1(k)} & e^{-i \cdot \Delta \varphi_{2M}^1(N-k)} & \cdots & e^{-i \cdot \Delta \varphi_{2M}^M(N-k)} \end{pmatrix};$$

○ $\Delta \varphi_n^m(k)$ is the phase difference between the signal in the delayed channel number n and the non-delayed channel for incoming frequency $F^m(k)$ ; $F^m(k)$ being a frequency that belongs to band number m and satisfies

the relation $\text{mod}(F^m(k), F_s) \cdot \dfrac{N}{F_s} = k$ , N being an integer corresponding to a number of bins of the frequency domain discrete transformation; and

○ $F^m(N\text{-}k)$ being a frequency that belongs to band number m and satisfies the relation

$$\text{mod}(F^m(N-k), F_s) \cdot \dfrac{N}{F_s} = (N-k).$$

2. The system according to any one of the preceding claims, wherein the frequency-domain transformation is a Fourier transform.

3. The system according to claim 2, wherein the Fourier transform is the FFT (Fast Fourier Transform).

4. The system according to any one of the preceding claims, wherein an inverse frequency-domain transformation is applied on the output frequency-domain complex signal for obtaining an output time-domain complex signal.

5. The system according to claim 4, wherein the inverse frequency-domain transformation is the IFFT (Inverse FFT).

6. The system according to any one of the preceding claims, wherein the output frequency-domain complex signal has a predefined frequency spectrum that comprises one or more predefined frequencies, which are whole multiples and/or half-multiples of a sampling frequency, according to which the analog signal is sampled.

7. The system according to claim 1, wherein M is equal to 1 and the output frequency-domain signal is a complex signal.

8. A method of performing complex sampling of a signal transformed to a frequency-domain by means of a 2M-order sampling, wherein the signal bandwidth belongs to $[F_{start}, F_{start}+MF_s]$, M being an integer, $F_{start}$ being a starting frequency defined manually or automatically and $F_s$ being a sampling frequency of the sampling, said method comprising:

    a) providing a sampling channel configured to:

        a.1. convert an analog signal to a corresponding substantially non-delayed digital signal; and
        a.2. transform said digital signal to a plurality of corresponding frequency-domain substantially non-delayed discrete components;

    b) providing 2M-1 additional sampling channels enabling to perform the 2M-order sampling, , each additional sampling channel configured to:

        b.1. delay an analog signal by a predefined value, giving rise to a delayed analog signal;
        b.2. convert said delayed analog signal to a corresponding delayed digital signal;
        b.3. transform said delayed digital signal to a plurality of frequency-domain delayed discrete components;
        b.4. provide one or more corresponding coefficients for each frequency-domain delayed discrete component and for each output frequency band defined by $[F_{start} +(m-1)F_s, F_{start}+mF_s]$, m e [1, M]; and
        b.5. multiply said one or more corresponding coefficients with said each corresponding frequency-domain delayed discrete component, giving rise to the multiplied frequency-domain delayed discrete components; and

    c) combining said multiplied frequency-domain delayed discrete components with the corresponding frequency-domain substantially non-delayed discrete components, giving rise to an output frequency-domain complex signal wherein:

    - the output frequency-domain signal $Y_m$ is defined for a corresponding output frequency bands by

$$Y_m(k) = \sum_{n=1}^{2M} Q_m^n(k) \cdot X_n(k),$$

        ○ $X_n(k)$ corresponding to the frequency-domain discrete components from the sampling channels;
        ○ $Q_m^n(k) = [P^{-1}(k)]^n_{2m-1}$ being the coefficients for each frequency-domain delayed discrete component and for each output frequency band;
        ○

$$P(k) = \begin{pmatrix} e^{i\cdot\Delta\varphi_1^1(k)} & e^{-i\cdot\Delta\varphi_1^1(N-k)} & \cdots & e^{-i\cdot\Delta\varphi_1^M(N-k)} \\ e^{i\cdot\Delta\varphi_2^1(k)} & \vdots & \ddots & \vdots \\ \vdots & \vdots & \ddots & \vdots \\ e^{i\cdot\Delta\varphi_{2M-1}^1(k)} & \vdots & \ddots & \vdots \\ e^{i\cdot\Delta\varphi_{2M}^1(k)} & e^{-i\cdot\Delta\varphi_{2M}^1(N-k)} & \cdots & e^{-i\cdot\Delta\varphi_{2M}^M(N-k)} \end{pmatrix};$$

o $\Delta\varphi^m_n(k)$ is the phase difference between the signal in the delayed channel number n and the non-delayed channel for incoming frequency $F^m(k)$.

○ $F^m(k)$ being a frequency that belongs to band number m and satisfies the relation

$$\mathbf{mod}(F^m(k), F_s) \cdot \frac{N}{F_s} = k$$, N being an integer corresponding to a number of bins of the frequency domain discrete transformation; and

○ $F^m(N\text{-}k)$ being a frequency that belongs to band number m and satisfies the relation

$$\mathbf{mod}(F^m(N-k), F_s) \cdot \frac{N}{F_s} = (N-k).$$

**Patentansprüche**

1. System, das dazu eingerichtet ist, eine komplexe Abtastung eines Signals, das in eine Frequenzdomäne transformiert wird, mit Hilfe einer 2M-Ordnungs-Abtastung auszuführen, wobei die Signalbandbreite in [$F_{start}$, $F_{start}$+$MF_s$] eingeschlossen ist, M eine ganze Zahl ist, $F_{start}$ eine Startfrequenz ist, die manuell oder automatisch bestimmt wird, und $F_s$ eine Abtastfrequenz der Abtastung ist und das System umfasst

a) einen Abtastkanal (205'), der enthält:

a.1. wenigstens einen Analog/Digital-Wandler (105'), der dazu eingerichtet ist, ein Analogsignal in ein entsprechendes im wesentlichen nicht verzögertes Digitalsignal umzuwandeln; und
a.2. wenigstens eine diskrete Frequenzdomänen-Transformationseinheit (210') zum Umwandeln des Digitalsignals in eine Vielzahl entsprechender im wesentlichen nicht verzögerter diskreter Frequenzdomänenkomponenten;

b) zusätzliche 2M-1-Abtastkanäle (205"), die die Ausführung der 2M-Ordnungs-Abtastung ermöglichen, wobei jeder zusätzliche Abtastkanal umfasst:

b.1. wenigstens eine Verzögerungseinheit (103), die dazu eingerichtet ist, ein Analogsignal um einen vorbestimmten Wert zu verzögern, wodurch ein verzögertes Analogsignal erzeugt wird;
b.2. wenigstens einen Analog/Digital-Wandler (105"), der dazu eingerichtet ist, das verzögerte Analogsignal in ein entsprechendes verzögertes Digitalsignal umzuwandeln;
b.3. wenigstens eine diskrete Frequenzdomänen-Transformationseinheit (210") zum Umwandeln des verzögerten Digitalsignals in eine Vielzahl verzögerter diskreter Frequenzdomänenkomponenten;
b.4. wenigstens eine Dateneinheit (250), die dazu eingerichtet ist, wenigstens einen entsprechenden Koeffizienten für jede verzögerte diskrete Frequenzdomänenkomponente und für jedes Ausgabefrequenzband bereitzustellen, das durch [$F_{start}$+(m-1)$F_s$, $F_{start}$+$mF_s$], m $\in$ [1, M], definiert ist; und
b.5. wenigstens eine Multiplikationseinheit, die dazu eingerichtet ist, den wenigstens einen entsprechenden Koeffizienten mit der jeweiligen entsprechenden verzögerten diskreten Frequenzdomänenkomponente zu multiplizieren, wodurch die
multiplizierten verzögerten diskreten Frequenzdomänenkomponenten erzeugt werden; und

c) wenigstens eine Summiereinheit zum Summieren der multiplizierten verzögerten diskreten Frequenzdomänenkomponenten mit den entsprechenden im wesentlichen nicht verzögerten diskreten Frequenzdomänenkomponenten, wodurch ein komplexes Frequenzdomänen-Ausgangssignal erzeugt wird;
wobei

- das Frequenzdomänen-Ausgangssignal $Y_m$ für ein entsprechendes Ausgabefrequenzband m durch

$$Y_m(k) = \sum_{n=1}^{2M} Q_m^n(k) \cdot X_n(k), \text{ definiert ist,}$$

• $X_n(k)$ den diskreten Frequenzdomänenkomponenten aus den Abtastkanälen entspricht;
• $Q_m^n(k) = [P^{-1}(k)]^n_{2m-1}$ die Koeffizienten für jede verzögerte diskrete Frequenzdomänenkomponente und für jedes Ausgabefrequenzband sind;
•

$$P(k) = \begin{pmatrix} e^{i \cdot \Delta\varphi_1^1(k)} & e^{-i \cdot \Delta\varphi_1^1(N-k)} & \cdots & e^{-i \cdot \Delta\varphi_1^M(N-k)} \\ e^{i \cdot \Delta\varphi_2^1(k)} & \vdots & \ddots & \vdots \\ \vdots & \vdots & \ddots & \vdots \\ e^{i \cdot \Delta\varphi_{2M-1}^1(k)} & \vdots & \ddots & \vdots \\ e^{i \cdot \Delta\varphi_{2M}^1(k)} & e^{-i \cdot \Delta\varphi_{2M}^1(N-k)} & \cdots & e^{-i \cdot \Delta\varphi_{2M}^M(N-k)} \end{pmatrix}$$

• $\Delta\varphi_n^m(k)$ die Phasendifferenz zwischen dem Signal in dem verzögerten Kanal Nummer n und dem nicht verzögerten Kanal für die eintreffende Frequenz $F^m(k)$ ist, wobei $F^m(k)$ eine Frequenz ist, die zu dem Band Nummer m gehört und die Beziehung $\mathrm{mod}(F^m(k), F_s) \cdot \dfrac{N}{F_s} = k$ erfüllt, wobei N eine ganze Zahl ist, die einer Anzahl von Bins der diskreten Frequenzdomänentransformation entspricht; und

• $F^m(N-k)$ eine Frequenz ist, die zu dem Band Nummer m gehört und die Beziehung $\mathrm{mod}(F^m(N-k), F_s) \cdot \dfrac{N}{F_s} = (N-k)$ erfüllt.

2. System nach einem der vorhergehenden Ansprüche, bei dem die Frequenzdomänentransformation eine Fourier-Transformation ist.

3. System nach Anspruch 2, bei dem die Fourier-Transformation die FFT (Schnelle Fourier-Transformation) ist.

4. System nach einem der vorhergehenden Ansprüche, bei dem eine inverse Frequenzdomänentransformation auf das komplexe Frequenzdomänen-Ausgangssignal angewendet wird, um ein komplexes Zeitdomänen-Ausgangssignal zu erhalten.

5. System nach Anspruch 4, bei dem die inverse Frequenzdomänentransformation die IFFT (inverse FFT) ist.

6. System nach einem der vorhergehenden Ansprüche, bei dem das komplexe Frequenzdomänen-Ausgangssignal ein vordefiniertes Frequenzspektrum hat, das wenigstens eine vordefinierte Frequenz umfasst, die ein ganzes Vielfaches und/oder ein halbes Vielfaches einer Abtastfrequenz ist, gemäß der das Analogsignal abgetastet wird.

7. System nach Anspruch 1, bei dem M gleich 1 und das Frequenzdomänen-Ausgangssignal ein komplexes Signal ist.

8. Verfahren zum Ausführen einer komplexen Abtastung eines Signals, das in eine Frequenzdomäne transformiert wird, mit Hilfe einer 2M-Ordnungs-Abtastung, wobei die Signalbandbreite zu [$F_{start}$, $F_{start}+MF_s$] gehört, M eine ganze Zahl ist, $F_{start}$ eine Startfrequenz ist, die manuell oder automatisch bestimmt wird, und $F_s$ eine Abtastfrequenz der Abtastung ist und das Verfahren umfasst

a) Bereitstellen eines Abtastkanals, der dazu eingerichtet ist:

a.1. ein Analogsignal in ein entsprechendes im wesentlichen nicht verzögertes Digitalsignal umzuwandeln; und

a.2. das Digitalsignal in eine Vielzahl entsprechender im wesentlichen nicht verzögerter diskreter Frequenzdomänenkomponenten umzuwandeln;

b) Bereitstellen zusätzlicher 2M-1-Abtastkanäle, die die Ausführung der 2M-Ordnungs-Abtastung ermöglichen, wobei jeder zusätzliche Abtastkanal dazu eingerichtet ist:

b.1. ein Analogsignal um einen vorbestimmten Wert zu verzögern, wodurch ein verzögertes Analogsignal erzeugt wird;
b.2. das verzögerte Analogsignal in ein entsprechendes verzögertes Digitalsignal umzuwandeln;
b.3. das verzögerte Digitalsignal in eine Vielzahl verzögerter diskreter Frequenzdomänenkomponenten umzuwandeln;
b.4. wenigstens einen entsprechenden Koeffizienten für jede verzögerte diskrete Frequenzdomänenkomponente und für jedes Ausgabefrequenzband bereitzustellen, das durch [$F_{start}$+(m-1)$F_s$, $F_{start}$+m$F_s$], m $\in$ [1, M], definiert ist; und
b.5. den wenigstens einen entsprechenden Koeffizienten mit der jeweiligen entsprechenden verzögerten diskreten Frequenzdomänenkomponente zu multiplizieren, wodurch die multiplizierten verzögerten diskreten Frequenzdomänenkomponenten erzeugt werden; und

c) Kombinieren der multiplizierten verzögerten diskreten Frequenzdomänenkomponenten mit den entsprechenden im wesentlichen nicht verzögerten diskreten Frequenzdomänenkomponenten, wodurch ein komplexes Frequenzdomänen-Ausgangssignal erzeugt wird;
wobei

- das Frequenzdomänen-Ausgangssignal $Y_m$ für ein entsprechendes Ausgabefrequenzband m durch

$$Y_m(k) = \sum_{n=1}^{2M} Q_m^n(k) \cdot X_n(k),$$ definiert ist,

• $X_n(k)$ den diskreten Frequenzdomänenkomponenten aus den Abtastkanälen entspricht;
• $Q_m^n(k) = [P^{-1}(k)]_{2m-1}^n$ die Koeffizienten für jede verzögerte diskrete Frequenzdomänenkomponente und für jedes Ausgabefrequenzband sind;
•

$$P(k) = \begin{pmatrix} e^{i \cdot \Delta\varphi_1^1(k)} & e^{-i \cdot \Delta\varphi_1^1(N-k)} & \cdots & e^{-i \cdot \Delta\varphi_1^M(N-k)} \\ e^{i \cdot \Delta\varphi_2^1(k)} & \vdots & \ddots & \vdots \\ \vdots & \vdots & \ddots & \vdots \\ e^{i \cdot \Delta\varphi_{2M-1}^1(k)} & \vdots & \ddots & \vdots \\ e^{i \cdot \Delta\varphi_{2M}^1(k)} & e^{-i \cdot \Delta\varphi_{2M}^1(N-k)} & \cdots & e^{-i \cdot \Delta\varphi_{2M}^M(N-k)} \end{pmatrix}$$

• $\Delta\varphi_n^m(k)$ die Phasendifferenz zwischen dem Signal in dem verzögerten Kanal Nummer n und dem nicht verzögerten Kanal für die eintreffende Frequenz $F^m(k)$ ist;

• $F^m(k)$ eine Frequenz ist, die zu dem Band Nummer m gehört und die Beziehung

$$\mathrm{mod}(F^m(k), F_s) \cdot \frac{N}{F_s} = k$$ erfüllt, wobei N eine ganze Zahl ist, die einer Anzahl von Bins der diskreten Frequenzdomänentransformation entspricht; und

• $F^m(N-k)$ eine Frequenz ist, die zu dem Band Nummer m gehört und die Beziehung

$$\mathrm{mod}(F^m(N-k), F_s) \cdot \frac{N}{F_s} = (N-k)$$ erfüllt.

**Revendications**

1. Système configuré pour effectuer un échantillonnage complexe d'un signal transformé en un domaine fréquentiel au moyen d'un échantillonnage d'ordre 2M, dans lequel la largeur de bande du signal est comprise dans [$F_{start}$, $F_{start}$+$MF_s$], M étant un entier, $F_{start}$ étant une fréquence de départ définie manuellement ou automatiquement et $F_s$ étant une fréquence d'échantillonnage de l'échantillonnage, ledit système comprenant :

   a) un canal d'échantillonnage (205') comprenant :

      a.1. au moins un convertisseur analogique/numérique (105') configuré pour convertir un signal analogique en un signal numérique sensiblement non-retardé correspondant ; et
      a.2. au moins une unité de transformation discrète dans le domaine fréquentiel (210') pour transformer ledit signal numérique en une pluralité de composants discrets sensiblement non-retardés dans le domaine fréquentiel correspondants ;

   b) 2M-1 canaux d'échantillonnage additionnels (205") permettant d'effectuer l'échantillonnage d'ordre 2M, chaque canal d'échantillonnage additionnel comprenant :

      b.1. au moins une unité de retard (103) configurée pour retarder un signal analogique d'une valeur prédéfinie, donnant lieu à un signal analogique retardé ;
      b.2. au moins un convertisseur analogique/numérique (105") configuré pour convertir ledit signal analogique retardé en un signal numérique retardé correspondant ;
      b.3. au moins une unité de transformation discrète dans le domaine fréquentiel (210") pour transformer ledit signal numérique retardé en une pluralité de composants discrets retardés dans le domaine fréquentiel ;
      b.4. au moins une unité de données (250) configurée pour fournir un ou plusieurs coefficients correspondants pour chaque composant discret retardé dans le domaine fréquentiel et pour chaque bande de fréquences de sortie définie par [$F_{start}$+ (m-1) $F_s$, $F_{start}$+m$F_s$], m □ [1, M] ; et
      b.5. au moins une unité de multiplication configurée pour multiplier lesdits un ou plusieurs coefficients correspondants par ledit chaque composant discret retardé dans le domaine fréquentiel correspondant, donnant lieu aux composants discrets retardés dans le domaine fréquentiel multipliés ; et

   c) au moins une unité de sommation pour faire la somme desdits composants discrets retardés dans le domaine fréquentiel multipliés avec les composants discrets sensiblement non-retardés dans le domaine fréquentiel correspondants, donnant lieu à un signal de sortie complexe dans le domaine fréquentiel;

   dans lequel :

   - le signal de sortie dans le domaine fréquentiel $Y_m$ est défini pour une bande de fréquences de sortie correspondante m, par :

$$Y_m(k) = \sum_{n=1}^{2M} Q_m^n(k).X_n(k)$$

      ○ $X_n(k)$ correspondant aux composants discrets dans le domaine fréquentiel des canaux d'échantillonnage ;
      ○ $Q_m^n(k) = [p^{-1}(k)]^n_{2m-1}$ étant les coefficients pour chaque composant discret retardé dans le domaine fréquentiel et pour chaque bande de fréquences de sortie ;
      ○

$$P(k) = \begin{pmatrix} e^{i.\Delta\varphi_1^1(k)} & e^{-i.\Delta\varphi_1^1(N-k)} & \cdots & e^{-i.\Delta\varphi_1^M(N-k)} \\ e^{i.\Delta\varphi_2^1(k)} & \cdots & \cdots & \cdots \\ \cdots & \cdots & \cdots & \cdots \\ e^{i.\Delta\varphi_{2M-1}^1(k)} & \cdots & \cdots & \cdots \\ e^{i.\Delta\varphi_{2M}^1(k)} & e^{-i.\Delta\varphi_{2M}^1(N-k)} & \cdots & e^{-i.\Delta\varphi_{2M}^M(N-k)} \end{pmatrix}$$

○ $\Delta\varphi^m_n(k)$ est la différence de phase entre le signal dans le canal retardé numéro n et le canal non-retardé pour la fréquence entrante $F^m(k)$ ; $F^m(k)$ étant une fréquence appartenant à la bande numéro m et satisfaisant à la relation :

$$\mathrm{mod}\big(F^m(k), F_s\big)\frac{N}{F_s} = k$$

N étant un entier correspondant à un nombre de cellules de la transformation discrète da le domaine fréquentiel ; et

o $F^m(N-K)$ étant une fréquence appartenant à la bande numéro m et satisfaisant à la relation :

$$\mathrm{mod}\big(F^m(N-k), F_s\big)\frac{N}{F_s} = (N-k).$$

2. Système selon l'une quelconque des revendications précédentes, dans lequel la transformation dans le domaine fréquentiel est une transformée de Fourier.

3. Système selon la revendication 2, dans lequel la transformée de Fourier est la FFT (transformée de Fourier rapide).

4. Système selon l'une quelconque des revendications précédentes, dans lequel une transformation inverse dans le domaine fréquentiel est appliquée sur le signal de sortie complexe dans le domaine fréquentiel pour obtenir un signal de sortie complexe dans le domaine temporel.

5. Système selon la revendication 4, dans lequel la transformation inverse dans le domaine fréquentiel est l'IFFT (FFT inverse).

6. Système selon l'une quelconque des revendications précédentes, dans lequel le signal de sortie complexe dans le domaine fréquentiel a un spectre de fréquences prédéfini qui comprend une ou plusieurs fréquences prédéfinies, qui sont des multiples entiers et/ou des demi-multiples d'une fréquence d'échantillonnage, suivant laquelle le signal analogique est échantillonné.

7. Système selon la revendication 1, dans lequel M est égal à 1 et le signal de sortie dans le domaine fréquentiel est un signal complexe.

8. Procédé pour effectuer un échantillonnage complexe d'un signal transformé en un domaine fréquentiel au moyen d'un échantillonnage d'ordre 2M, dans lequel la largeur de bande du signal appartient à [$F_{start}$, $F_{start}+MF_s$], M étant un entier, $F_{start}$ étant une fréquence de départ définie manuellement ou automatiquement et $F_s$ étant une fréquence d'échantillonnage de l'échantillonnage, ledit procédé comprenant les étapes consistant à :

a) prévoir un canal d'échantillonnage configuré pour :

a.1. convertir un signal analogique en un signal numérique sensiblement non-retardé correspondant ; et
a.2. transformer ledit signal numérique en une pluralité de composants discrets sensiblement non-retardés dans le domaine fréquentiel correspondants ;

b) prévoir 2M-1 canaux d'échantillonnage additionnels permettant d'effectuer l'échantillonnage d'ordre 2M, chaque canal d'échantillonnage additionnel étant configuré pour :

b.1. retarder un signal analogique d'une valeur prédéfinie, donnant lieu à un signal analogique retardé ;
b.2. convertir ledit signal analogique retardé en un signal numérique retardé correspondant ;
b.3. transformer ledit signal numérique retardé en une pluralité de composants discrets retardés dans le domaine fréquentiel ;
b.4. fournir un ou plusieurs coefficients correspondants pour chaque composant discret retardé dans le domaine fréquentiel et pour chaque bande de fréquences de sortie définie par $[F_{start}+(m-1)F_s, F_{start}+mF_s]$, $m \square [1, M]$ ; et
b.5. multiplier lesdits un ou plusieurs coefficients correspondants par ledit chaque composant discret retardé dans le domaine fréquentiel correspondant, donnant lieu aux composants discrets retardés dans le domaine fréquentiel multipliés ; et

c) combiner lesdits composants discrets retardés dans le domaine fréquentiel multipliés avec les composants discrets sensiblement non-retardés dans le domaine fréquentiel correspondants, donnant lieu à un signal de sortie complexe dans le domaine fréquentiel;

pour lequel :

- le signal de sortie dans le domaine fréquentiel $Y_m$ est défini pour une bande de fréquences de sortie correspondante par :

$$Y_m(k) = \sum_{n=1}^{2M} Q_m^n(k).X_n(k)$$

○ $X_n(k)$ correspondant aux composants discrets dans le domaine fréquentiel des canaux d'échantillonnage ;
○ $Q_m^n(k) = [P^{-1}(k)]^n_{2m-1}$ étant les coefficients pour chaque composant discret retardé dans le domaine fréquentiel et pour chaque bande de fréquences de sortie ;
○

$$P(k) = \begin{pmatrix} e^{i.\Delta\varphi_1^1(k)} & e^{-i.\Delta\varphi_1^1(N-k)} & \cdots & e^{-i.\Delta\varphi_1^M(N-k)} \\ e^{i.\Delta\varphi_2^1(k)} & \cdots & & \cdots & \cdots \\ \cdots & \cdots & & \cdots & \cdots \\ e^{i.\Delta\varphi_{2M-1}^1(k)} & \cdots & & \cdots & \cdots \\ e^{i.\Delta\varphi_{2M}^1(k)} & e^{-i.\Delta\varphi_{2M}^1(N-k)} & \cdots & e^{-i.\Delta\varphi_{2M}^M(N-k)} \end{pmatrix}$$

○ $\Delta\varphi_n^m(k)$ est la différence de phase entre le signal dans le canal retardé numéro n et le canal non-retardé pour la fréquence entrante $F^m(k)$ ;
○ $F^m(k)$ étant une fréquence appartenant à la bande numéro m et satisfaisant à la relation :

$$\mathrm{mod}\!\left(F^{m}(k),F_{s}\right)\frac{N}{F_{s}}=k$$

N étant un entier correspondant à un nombre de cellules de la transformation discrète da le domaine fréquentiel ; et

o $F^{m}$(N-K) étant une fréquence appartenant à la bande numéro m et satisfaisant à la relation :

$$\mathrm{mod}\!\left(F^{m}(N-k),F_{s}\right)\frac{N}{F_{s}}=(N-k).$$

FIG. 1A (PRIOR ART)

EP 2 391 001 B1

FIG. 1B (PRIOR ART)

FIG. 2

EP 2 391 001 B1

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5099194 A
- US 5099243 A
- US 5109188 A

### Non-patent literature cited in the description

- **A. W. KOHLENBERG.** Exact interpolation of band-limited functions. *journal of Applied Physics,* 1953, vol. 24 (12), 1432-1436
- **R.G. VAUGHAN et al.** The Theory of Bandpass Sampling. *IEEE Transactions on Signal Processing,* September 1991, vol. 39 (2), 1973-1984
- **M. VALKAMA et al.** A Novel Image Rejection Architecture for Quadrature Radio Receivers. *IEEE Transactions on Circuits and Systems,* 2004, vol. 51 (2), 61-68
- **VALKAMA et al.** Second-Order Sampling of Wideband Signals. *IEEE International Symposium on Circuits and Systems,* May 2001, vol. 2, 801-804
- **H. YONG et al.** Second-Order Based Fast Recovery of Bandpass Signals. *International Conference on Signal Processing Proceedings,* 1998, vol. 1, 7-10
- **HUANG YONG et al.** Second-order sampling-based fast recovery of bandpass signals. *SIGNAL PROCESSING PROCEEDINGS, 1998. ICSP '98. 1998 FOURTH INTERNATION AL CONFERENCE ON BEIJING, CHINA,* 12 October 1998, ISBN 978-0-7803-4325-2, 7-10